# EUROPEAN PATENT APPLICATION

(11) **EP 2 704 148 A1**
(43) Date of publication of application: **05.03.2014**
(21) Application number: 13173940.1
(22) Date of filing: 27.06.2013
(51) Int. Cl.: G11B 27/11

(54) **Apparatus and method for recording and reproducing a progressive playlist, and information storage medium therefor**

(30) Priority: 31.08.2012 KR 20120096792
(71) Applicant: Samsung Electronics Co., Ltd, Gyeonggi-do 443-742 (KR)
(72) Inventor: Yang, Jong-ho, Gyeonggi-do (KR); Bak, Bong-gil, Gyeonggi-do (KR)
(74) Representative: Clark, David James

(57) **Abstract**

An information storage medium to be used at a reproduction apparatus for reproducing multimedia data is provided. The information storage medium includes information indicating that at least one playlist is a progressive playlist, and progressive playlist description information including information necessary for downloading multimedia data to reproduce the at least one playlist. Further, a reproduction apparatus, a reproduction method, a recording apparatus, and a recording method are provided.

## Description

### BACKGROUND

### 1. Field

The present disclosure relates to reproduction and recording of multimedia data. More particularly, the disclosure relates to an apparatus and method for recording and reproducing a progressive playlist, and an information storage medium therefor.

### 2. Description of the Related Art

Optical disc reproduction standards in the related art, such as the Blu-ray DISC™ reproduction standard, enables authoring of applications using general purpose languages, such as Java, by employing and extending general purpose application platforms, such as the Java platform. As a result, files recorded on an optical disc or files at application-accessible locations may be controlled by using a Java application. Such a platform-based service enables a content provider to author an application or to more easily extend an existing application. However, in an application-based content reproduction method, it is necessary to load and activate an application in advance for reproduction of contents, and thus a relatively long period of time elapses for reproduction of contents as compared to other optical disc reproduction standards, such as the DVD reproduction standard. To resolve this problem, the Blu-ray™ reproduction standard introduced an algorithm for an autostart playlist. An autostart playlist is an apparatus for reproduction of multimedia data and is a playlist designated to be reproduced via a middleware prior to an application being loaded and activated. A user may view video data corresponding to an autostart playlist prior to an application being loaded. All contents required for reproduction of an autostart playlist should exist within a reproduction apparatus.

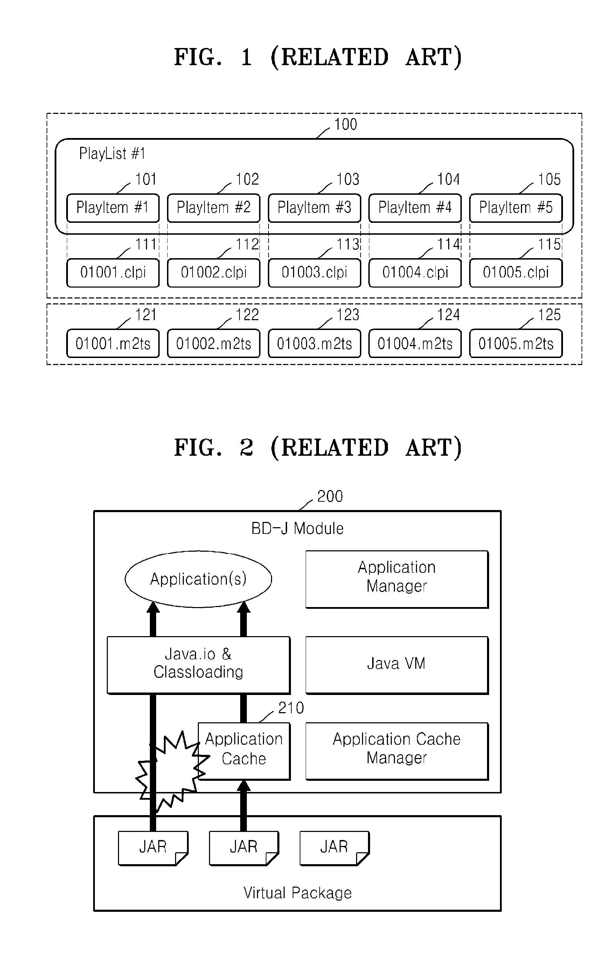

An autostart playlist is structurally identical to a general playlist except that the autostart playlist has an additional purpose of being automatically started before an application is loaded. FIG. 1 shows the configuration of a playlist #1 100. Referring to FIG. 1, the playlist #1 100 includes 5 play items, that is, play items #1 through #5 101 through 105. A play item denotes a time-based playing interval from IN_time to OUT_time. The play items #1 through #5 101 through 115 are reference information regarding corresponding clip information files 111 through 115, respectively, and include names of the clip information files 111 through 115. A clip information file is a property file regarding an audio-visual stream file, where the audio-visual stream file stores a MPEG-2 transmission stream. A clip information file stores access information regarding a corresponding audio-visual stream file, and a presentation engine decides a start point based on clip information when the presentation engine reads out data from the audio-visual stream file. In the example shown in FIG. 1, five audio-visual stream files 121 through 125 respectively correspond to the clip information files 111 through 115.

According to optical disc reproduction standards in the related art, a network service cannot be used prior to a Java platform supporting the network service being activated and an application using the network service is activated. In other words, files on a network may be downloaded and reproduced only after a corresponding application is activated. Both an autostart playlist in a Java language-based title and a playlist in a high definition movie (HDMV) not based on Java language are unable to reproduce files on a network. Since an autostart playlist is reproduced while an application is not yet loaded, the autostart playlist may only reproduce files that are always stored in a reproduction apparatus. Therefore, there is a limit to the video data that can be viewed by a user.

As described above, reproduction of a playlist indicates reproduction of files recorded on a disc and is performed simultaneously as a Java application is being loaded and activated. Since both reproduction of an autostart playlist and loading of a Java application need to access a disc, a loader, which is a limited resource, is shared thereby. As a result, an autostart playlist interfere with quick loading of an application. To resolve the problem, the Blu-ray Disc™ reproduction standard allows a reproduction apparatus to load particular files to a cache memory, in advance. However, since capacity of the cache memory is limited, a disc may be accessed while an application is being loaded. FIG. 2 is a diagram which describes a problem during reproduction of an autostart playlist, showing the configuration of a BD-J module 200 that corresponds to an application driver in the Blu-ray disc™ reproduction standard. To quickly load an application and to provide a quick response, it is necessary to increase the capacity of a cache memory 210. However, increase of the cache memory 210 causes an increase of costs. Therefore, a Blu-ray disc™ only provides an autostart playlist for reproducing contents with short reproduction time. To prevent collision with loading of an application that occurs when contents with long reproduction time is reproduced by an autostart playlist, an autostart playlist is only used to show that content service of a disc is being currently initiated.

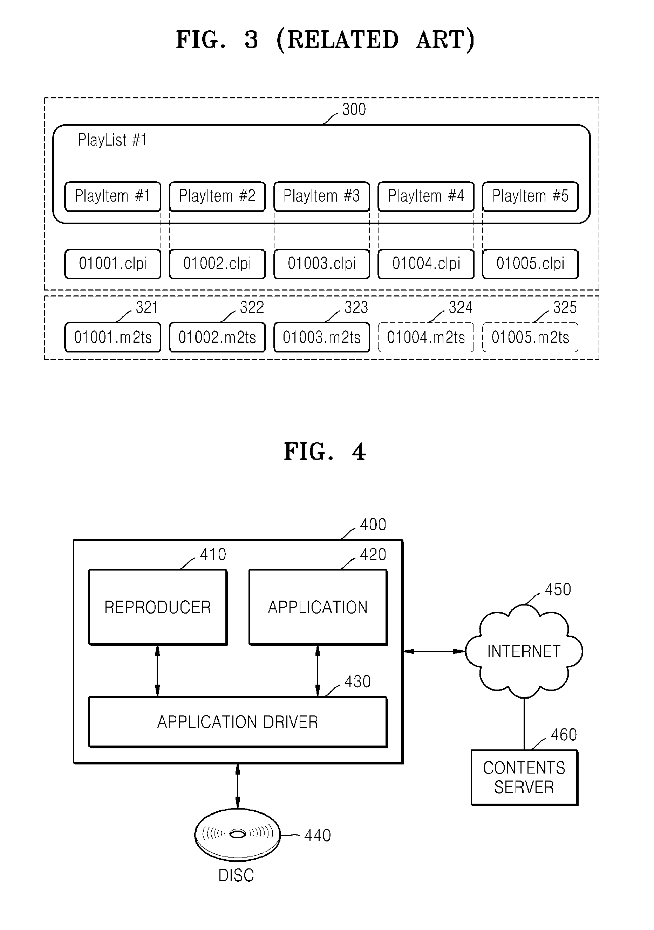

Meanwhile, to provide the latest contents to users of disc reproduction apparatuses via a network, a progressive playlist algorithm has been introduced, where a progressive playlist downloads files to be reproduced later via a network, while existing files are being reproduced. FIG. 3 shows an example of reproduction of a progressive playlist 300. Referring to FIG. 3, while audio-visual stream files existing in an reproduction apparatus, that is, 01001.m2ts 321, 01002.m2ts 322, and 01003.m2ts 323 are being reproduced, audio-visual stream files to be reproduced in the next, that is, 01004.m2ts 324 and 01005.m2ts 325 are downloaded via a network. During reproduction of a progressive playlist, the subject of downloading files to be reproduced next is a Java application, and thus the downloading service may only be used after activation of the Java application. Furthermore, it is necessary to update a virtual file system for updating clip information, adding a play item, and updating a playlist file, where it is necessary to first terminate all disc-based applications for performing such a disc updating task. After the disc is updated, it is necessary to load applications again based on the updated disc. Therefore, according to optical disc reproduction standards in the related art, a long period of time elapses for reproducing a progressive playlist after a disc is inserted, thereby increasing the wait time of a user.

### SUMMARY

Aspects of the exemplary embodiments provide a method and apparatus for enabling a user to quickly view the newest contents provided by a service provider.

Exemplary embodiments provide a method and an apparatus for reproducing an autostart playlist using the method of reproducing a progressive playlist. This is confirmed by controlling an application driver (middleware) without loading and activating an application.

The exemplary embodiments also provide a method and an apparatus for reproducing a progressive playlist without performing a disc updating task that takes a long period of time.

The exemplary embodiments also provide a method and an apparatus for providing the newest contents of a content author without loading and activating an application.

The exemplary embodiments also provide a method and an apparatus for reproducing a progressive playlist, which is downloaded via a network, without performing a disc updating task.

The exemplary embodiments also provide a method and an apparatus for simultaneously reproducing contents as an application is loaded, without interfering with the loading of the application.

According to an aspect of the exemplary embodiments an information storage medium is provided to be used at a reproduction apparatus for reproducing multimedia data, the information storage medium configured to include information indicating that at least one playlist is a progressive playlist; and is configured to include progressive playlist description information including information necessary for downloading multimedia data to reproduce the at least one playlist.

The information indicating that at least one playlist is a progressive playlist is a flag included in a description file of the corresponding playlist.

The information indicating that at least one playlist is a progressive playlist includes a flag which indicates whether an autostart playlist to be reproduced before the reproduction apparatus activates an application is a progressive playlist.

The information indicating that at least one playlist is a progressive playlist is included in a table that is included in an application object for storing management information related to a title, and defines a list of accessible playlists.

The progressive playlist description information includes at least one of information regarding a location for an application driver of the reproduction apparatus to download multimedia data which corresponds to the at least one playlist and information regarding a location to store the downloaded multimedia data.

The description information of the progressive playlist includes information regarding data to be reproduced in a case where the application driver of the reproduction apparatus fails to download multimedia data which corresponds to the at least one playlist.

The progressive playlist description information includes a description file recorded at a predetermined location of the information storage medium.

The progressive playlist authoring information includes a path information file recorded at a predetermined location of the information storage medium and includes a description file stored at a path designated by the path information file.

According to another aspect of the exemplary embodiments, there is provided a reproduction apparatus for reproducing multimedia data, the reproduction apparatus including a reproducer, which decodes multimedia data; an application driver, which, in response to a playlist to be reproduced being a progressive playlist, downloads multimedia data to reproduce the playlist from the outside with reference to corresponding progressive playlist description information and reproduces the playlist by controlling the reproducer to decode the downloaded multimedia data; and a storage configured to store the downloaded multimedia data.

The application driver refers to a flag included in a description file of the playlist and determines whether the playlist is a progressive playlist.

The application driver refers to a flag which indicates whether an autostart playlist to be reproduced before the reproduction apparatus activates an application is a progressive playlist and determines whether the autostart playlist is a progressive playlist.

The application driver refers to a table that is included in an application object configured to store management information related to a title and defines a list of accessible playlists and determines whether the autostart playlist is a progressive playlist.

The application driver is configured to download multimedia data which corresponds to the playlist with reference to location information included in the progressive playlist description information and stores the multimedia data at a predetermined location of the storage.

In response to the application driver failing to download multimedia data which corresponds to the playlist, the application driver refers to the progressive playlist description information and determines data to be reproduced instead of the multimedia data.

According to another aspect of the exemplary embodiments, there is provided a method by which an application driver of a reproduction apparatus reproduces multimedia data, the method including recognizing the type of an autostart playlist; in response to the autostart playlist being a progressive playlist, downloading multimedia data for reproducing the autostart playlist from the outside with reference to corresponding progressive playlist description information; storing the downloaded multimedia data in a storage unit of the reproduction apparatus; and reproducing the autostart playlist by using the stored multimedia data.

According to another aspect of the exemplary embodiments, there is provided a recording apparatus configured to record multimedia data, the recording apparatus including a recorder configured to record data to an information storage medium; and a controller configured to control the recorder to record information indicating that at least one playlist is a progressive playlist and to record progressive playlist description information including information necessary to download multimedia data for reproducing the at least one playlist from outside to the information storage medium.

According to another aspect of the exemplary embodiments, there is provided a method of recording multimedia data, the method including recording information to an information storage medium; which indicates that at least one playlist is a progressive playlist to an information storage medium; and recording progressive playlist description information including information necessary to download to the information storage medium multimedia data for reproducing the at least one playlist from the outside.

According to another aspect of the exemplary embodiments, there is provided a reproduction apparatus configured to reproduce multimedia data including: an application driver, which, in response to a playlist to be reproduced being a progressive playlist, is configured to download multimedia data from the outside to reproduce the playlist with reference to corresponding progressive playlist description information and is configured to reproduce the playlist by controlling a reproducer in order to decode the downloaded multimedia data.

The reproduction apparatus configured to reproduce the multimedia data may further include a reproducer, configured to decode multimedia data. A storage may be provided to store the downloaded multimedia data.
According to the present invention there is provided an apparatus and method as set forth in the appended claims. Other features of the invention will be apparent from the dependent claims, and the description which follows.

### BRIEF DESCRIPTION OF THE DRAWINGS

The above and other features and advantages of the exemplary embodiments will become more apparent describing in detail exemplary embodiments thereof with reference to the attached drawings in which:

FIG. 1 shows the configuration of a playlist of the related art;

FIG. 2 is a diagram which describes a problem during reproduction of an autostart playlist of the related art;

FIG. 3 shows an example of reproduction of a progressive playlist of the related art;

FIG. 4 is a diagram showing a multimedia data reproduction apparatus according to an exemplary embodiment;

FIG. 5 is a flowchart of a reproduction method according to an exemplary embodiment;

FIG. 6 is a diagram showing a multimedia data recording apparatus according to an exemplary embodiment;

FIG. 7 is a flowchart of a recording method according to an exemplary embodiment;

FIG. 8 shows an example of information which indicates that a playlist is a progressive playlist;

FIG. 9 shows another example of information which indicates that a playlist is a progressive playlist;

FIG. 10 shows an example of a path at which progressive playlist description information is stored;

FIG. 11 shows an example of progressive playlist description information;

FIG. 12 shows an example in which progressive playlist description information includes a path information file and a progressive playlist description file; and

FIG. 13 shows an example of a path information file.

### DETAILED DESCRIPTION OF THE EXEMPLARY EMBODIMENTS

Expressions such as "at least one of," when preceding a list of elements, modify the entire list of elements and does not modify the individual elements of the list.

Hereinafter, the exemplary embodiments will be described with reference to the attached drawings.

FIG. 4 is a diagram showing a multimedia data reproduction apparatus 400 according to an exemplary embodiment.

Referring to FIG. 4, the multimedia data reproduction apparatus 400 includes a reproducer 410 which decodes and reproduces multimedia data, a storage 420 which stores data for reproducing a progressive playlist, and an application driver 430 which controls reproduction of multimedia data according to the exemplary embodiments and communicates with a content server 460, which provides data for reproducing a progressive playlist, via a network 450. The application driver 430 is a middleware module configured to load and activate an application of a disc 440. In response a playlist to be reproduced being a progressive playlist, the application driver 430 reproduces the playlist by downloading multimedia data to reproduce the playlist from the external content server 460 with reference to corresponding progressive playlist description information and controls the reproducer 410 to decode the downloaded multimedia data.

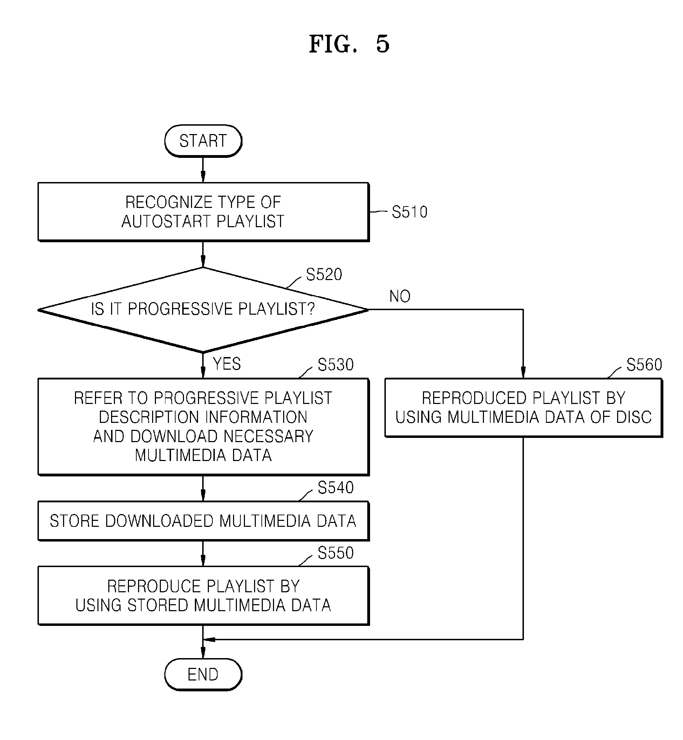

FIG. 5 is a flowchart of a reproduction method according to an exemplary embodiment, i.e., a method of reproducing an autostart playlist using the method of reproducing a progressive playlist.

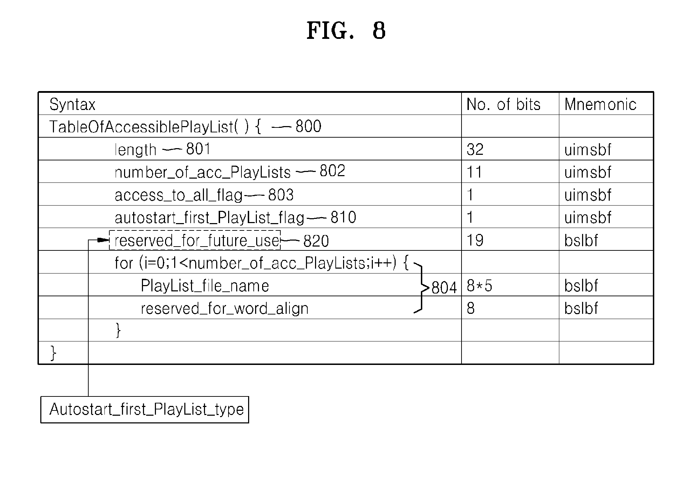

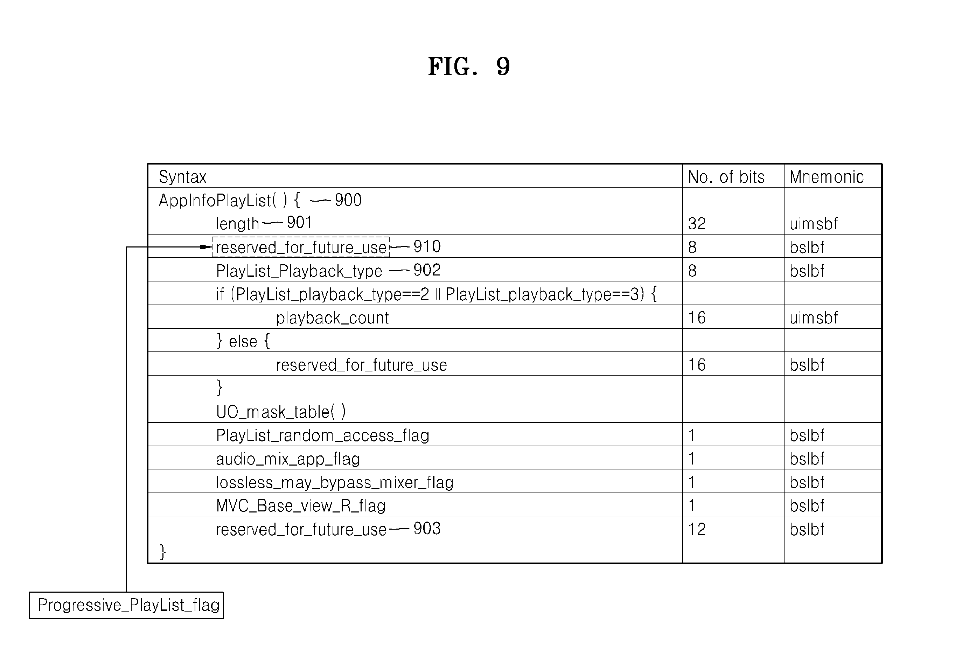

Referring to FIGS. 4 and 5, the application driver 430 first identifies type of an autostart playlist (operation S510). The disc 440 designates an autostart playlist to be reproduced by the application driver 430 prior to activation of an application is completed when a tile of the disc 440 is reproduced and further stores information which indicates the type of the autostart playlist. A flag indicating whether an autostart playlist is a progressive playlist may be defined in any of various formats. Detailed description thereof will be provided below with reference to FIGS. 8 and 9.

In response to the autostart playlist to be reproduced not being a progressive playlist (operation S520), the autostart playlist is reproduced by using multimedia data recorded on the disc 440 (operation S560). In response to the autostart playlist to be reproduced being a progressive playlist (operation S520), necessary multimedia data are downloaded from the outside with reference to progressive playlist description information recorded on the disc 440 (operation S530). The downloaded multimedia data is stored in the storage 420 (operation S540), and the application driver 430 reproduces the autostart playlist using the method of reproducing a progressive playlist by using the stored multimedia data (operation S550). At this point, the application driver 430 sequentially downloads and stores audio-visual stream files which correspond to the autostart playlist and may stream-reproduce multimedia data by downloading an audio-visual stream file which corresponds to a play item to be reproduced next, while an audio-visual stream file which corresponds to a current play item are being reproduced.

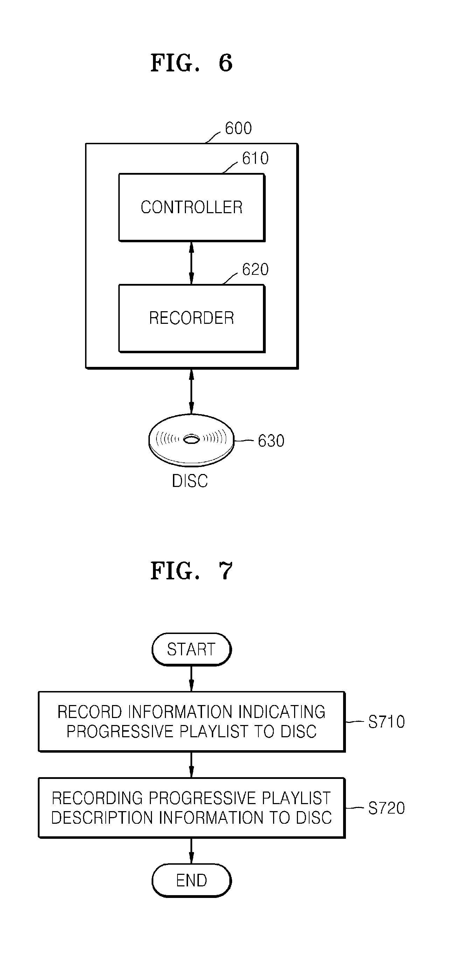

FIG. 6 is a diagram showing a multimedia data recording apparatus 600 according to an exemplary embodiment.

Referring to FIGS. 4 and 6, the recording apparatus 600 records information for the application driver 430 of the multimedia data reproduction apparatus 400 to reproduce a predetermined playlist as a progressive playlist regardless of activation of an application to the disc 630 together with the predetermined playlist. The recorder 620 is configured to record data to the disc 630, which is an information recording medium, where the controller 610 determines and generates data to be recorded on a disc 630 and controls the recorder 620 to record the generated data on the disc 630. Information recorded on the disc 630 is progressive playlist description information including information which indicates that at least one playlist is a progressive playlist and information to download multimedia data for reproducing the at least one playlist from outside. Detailed descriptions thereof will be given below with reference to FIGS. 8 through 13.

FIG. 7 is a flowchart of a recording method according to an exemplary embodiment.

Referring to FIGS. 6 and 7, when the recording apparatus 600 records multimedia data on the disc 630, the recording apparatus 600 additionally records information which indicates that a predetermined playlist is a progressive playlist (operation S710) and also records progressive playlist description information including information for downloading data for reproducing the predetermined playlist from outside (operation S720). The exemplary embodiments may be applied to enhance optical disc reproduction standards in the related art. In this case, a playlist configuration may be recorded according to an optical disc reproduction standard in the related art, where a progressive playlist description file including information regarding locations of files and information indicating that a playlist to be reproduced using the method of reproducing a progressive playlist is a progressive playlist, may be additionally recorded, such that the application driver 430 directly reproduces a progressive playlist.

FIG. 8 shows an example of information which indicates that a playlist is a progressive playlist.

In FIG. 8, a table TableOfAccessiblePlayLists 800 is information included in a Blu-ray Disc™ Java® (BD-J) object which includes management information related to a BD-J title in the Blu-ray Disc™ reproduction standard and is information used for controlling accesses to audio-visual playlists on a virtual package for BD-J applications that are executed while the BD-J object is valid.

The table 800 includes its length 801, a number 802 of filenames 804 of playlists in the table 800, a flag 803 indicating whether to allow access to all playlists on a virtual package or to only allow access to playlists listed in the table 800, a flag 810 indicating whether to automatically start presentation of the first playlist of the table 800 when a title referring to the BD-J object is selected, and the filenames 804 of accessible playlists. In response to the value of the autostart_first_PlayList_flag 810 being 1, the first playlist from among accessible playlists is an autostart playlist.

According to an exemplary embodiment, in response to the first playlist of the table 800 being an autostart playlist, a field autostart_first_PlayList_type indicating that the corresponding playlist is a progressive playlist may be additionally used. Referring to FIG. 8, at least a portion of the field reserved_for_future_use 820 may be used as space for the field autostart_first_PlayList_type, thereby stating the type of an autostart playlist without changing the existing table structure. There may be indicated whether an autostart playlist is a progressive playlist by using 1 bit from among reserved 19 bits. For example, in response to the value of the field autostart_first_PlayList_type being "S" there is an indication that the first playlist from among playlists stated in the table table 800 is a normal playlist, and, in response to the value of the field autostart_first_PlayList_type being "1" this an intention that the first playlist from among playlists stated in the table table 800 is a progressive playlist.

In response to the value of the field autostart_first_Playlist_flag being "1," the application driver 430 checks the field autostart_first_PlayList_type. In response to the value of the field autostart_first_PlayList_type being "1," the autostart playlist is reproduced as a progressive playlist. However, in response to the reproduction apparatus 400 not being connected to a network, the application driver 430 may notify a user by outputting information indicating that it is unable to reproduce the autostart playlist via a graphic user interface (GUI).

FIG. 9 shows another example of information indicating that a playlist is a progressive playlist.

AppInfoPlayList 900 of FIG. 9 includes playlist description information included in the playlist file xxxxx.mpls defined in the Blu-ray Disc™ reproduction standard. The AppInfoPlayList 900 includes information regarding play items in a corresponding playlist, such as reproduction type 902. Next to a field length 901, an 8-bit field reserved_for_future_use 910 is arranged, where at least a portion of the field reserved_for_future_use 910 may be used for indicating the type of corresponding playlist. One-bit space is sufficient for a flag indicating whether the corresponding playlist is a progressive playlist. In response to the value of the flag progressive_PlayList_flag being "0," the flag progressive_PlayList_flag indicates that the corresponding playlist is a general playlist. In response to the value of the flag progressive_PlayList_flag being "1," the flag progressive_PlayList_flag indicates that the corresponding playlist is a progressive playlist. According to an exemplary embodiment, information regarding the type of a playlist may be included without modifying standard data structure in the related art as in the exemplary embodiment shown in FIG. 8 and may indicate whether a playlist is a progressive playlist with respect to not only an autostart playlist, but also other playlists. Although examples of fields for designating the type of progressive playlist are given in FIGS. 8 and 9, the exemplary embodiments are not limited thereto, and types of flags may be otherwise embodied. For example, a second reserved field 903 of the field AppInfoPlayList 900 may be used for type designation, or a type flag may be included in any other structure, including information regarding a playlist.

To reproduce a progressive playlist, it is necessary to access a network. According to the exemplary embodiments, the application driver 430, which is middleware, reproduces a progressive playlist by performing a series of operations, such as accessing a network, controlling buffering and determining recording locations. In other words, it is necessary to request the application driver 430 to perform operations that are performed by an application in the related art. For the application driver 430 to perform operations for reproducing a progressive playlist, it is necessary for information regarding the operations to be performed to be in defined in advance. To this end, the exemplary embodiments provide progressive playlist description information. Progressive playlist description information is recorded on a disc and is stored at a predetermined location which the application driver 430 may access.

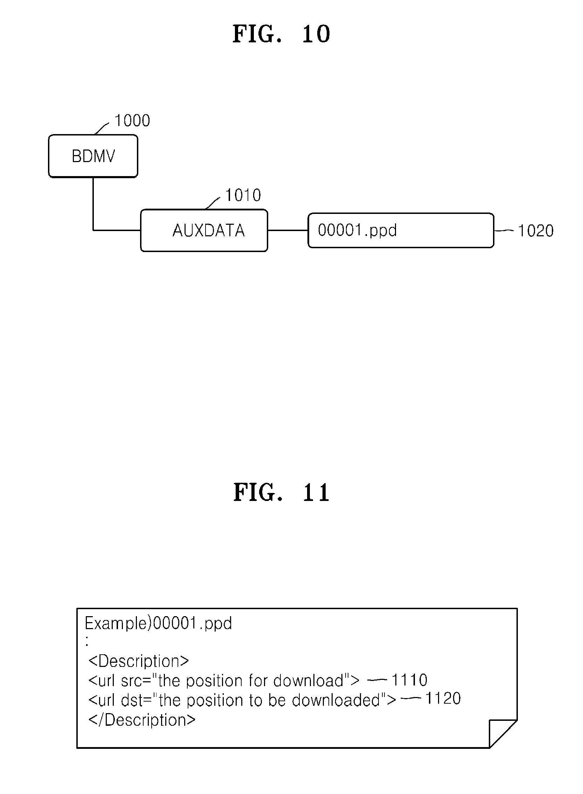

FIG. 10 shows an example of a path at which progressive playlist description information is stored, where a description file 00001.ppd 1020, including progressive playlist description information, is stored in a sub-path AUXDATA 1010 of a path BDMV 1000 of a Blu-ray Disc™. Referring to FIG. 10, the progressive playlist description file 00001.ppd 1020 includes information for identifying a corresponding progressive playlist, that is, '00001' in its filename. If the name of a playlist file is 00001.mpls, a corresponding progressive playlist description file may be named to 00001.ppd. In response to a playlist to be reproduced being a progressive playlist, the application driver 430 searches for a progressive playlist description file which corresponds to the playlist in the path /BDMV/AUXDATA and refers to the progressive playlist description file. The extension ppd is merely an example of extensions for progressive playlist description files, and may vary.

FIG. 11 shows an example of progressive playlist description information, i.e., the content of the progressive playlist description file 00001.ppd 1020 of FIG. 10.

Referring to FIGS. 4, 10, and 11, the progressive playlist description file 1020 defines operations to be performed by the application driver 430 for reproduction of a progressive playlist and basically includes information necessary for downloading multimedia data for reproduction of the progressive playlist. For example, the progressive playlist description file 1020 defines a method of accessing the content server 460, a name of a file to be downloaded, and a name and a location for storing the file. In FIG. 11, the progressive playlist description file 1020 defines a source location 1110 at which clip information files and audio-visual stream files for reproducing a progressive playlist have been stored and a storage location 1120 in the storage 420 at which downloaded data is to be stored. The progressive playlist description file 1020 may include information regarding a stream file on a disc that is to be reproduced instead, in a case where a network is not connected, that is, the downloading of a file fails. Furthermore, the progressive playlist description file 1020 may include information regarding a method of accessing a network, a buffering method, and other control methods. The application driver 430 may obtain all information necessary for reproduction of a progressive playlist, such as a method of accessing a network, a stored location, a buffering method, and a control method, by parsing and decoding descriptors defined in the progressive playlist description file 1020. Thus, the application driver 430 may reproduce the progressive playlist without loading an application.

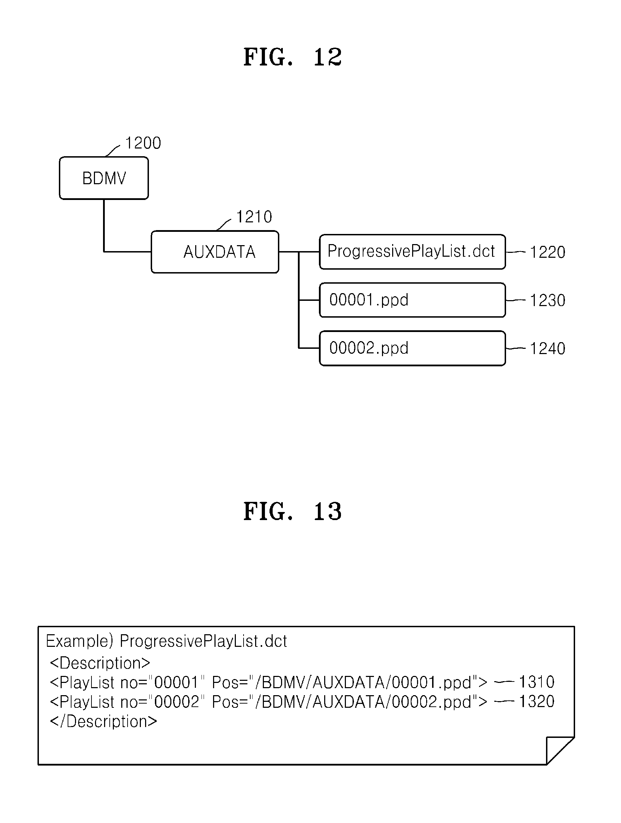

FIG. 12 shows an example in which progressive playlist description information includes a path information file and a progressive playlist description file.

Referring to FIG. 12, a separate path information file ProgressivePlaylist.dct 1220 stating paths of progressive playlist description files and the progressive playlist description files 00001.ppd 1230 and 00002.ppd 1240 are recorded at a sub-path AUXDATA of a path BDMV 1200 of a Blu-ray Disc™.

FIG. 13 shows an example of a path information file, that is, the content of the path information file ProgressivePlaylist.dct 1220.

Referring to FIG. 13, the path information file ProgressivePlaylist.dct 1220 includes location information 1310 and 1320 regarding the progressive playlist description files 00001.ppd and 00002.ppd. Each of the location information 1310 and 1320 include items including playlist numbers "00001" and "00002," which are identification information, and items including information regarding locations of progressive playlist description files for corresponding playlists. The application driver 430 may refer to the path information file ProgressivePlaylist.dct 1220 and may figure out locations of a ppd which corresponds to a playlist to be reproduced. Although FIGS. 11 and 13 shows information files written in the extensible markup language (XML) format, the present invention is not limited thereto, and it would be obvious to one of ordinary skill in the art that information files may be written in any other languages or formats.

Although the exemplary embodiments for reproducing a progressive playlist by enhancing the Blu-ray Disc™ reproduction standard are given above, application of the exemplary embodiments is not limited to Blu-ray Disc™ reproduction. The exemplary embodiments may be applied to other reproduction standards in order to reproduce streaming contents without loading an application therefor.

The exemplary embodiments can also be embodied as computer readable codes stored as data structures on a non-transitory computer readable recording medium. The computer readable recording medium is any data storage device that can store data which can be thereafter read by a computer system. Examples of the computer readable recording medium nclude read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.
Although a few preferred embodiments have been shown and described, it will be appreciated by those skilled in the art that various changes and modifications might be made without departing from the scope of the invention, as defined in the appended claims.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium configured to be used in a reproduction apparatus for reproducing multimedia data, the information storage medium comprising:
information indicating that at least one playlist is a progressive playlist; and
progressive playlist description information including necessary information for downloading multimedia data in order to reproduce the at least one playlist.

2. The information storage medium of claim 1, wherein the information indicating that at least one playlist is a progressive playlist is a flag included in a description file of the corresponding playlist.

3. The information storage medium of claim 1, wherein the information indicating that at least one playlist is a progressive playlist comprises a flag which indicates whether an autostart playlist to be reproduced before the reproduction apparatus activates an application, is a progressive playlist.

4. The information storage medium of claim 1, wherein the information indicating that at least one playlist is a progressive playlist is included in a table that is included in an application object configured to store management information related to a title and defines a list of accessible playlists.

5. The information storage medium of claim 1, wherein the progressive playlist description information comprises at least one of information regarding a location for an application driver of the reproduction apparatus to download multimedia data corresponding to the at least one playlist and information regarding a location to store the downloaded multimedia data.

6. The information storage medium of claim 1, wherein the progressive playlist description information comprises information regarding data to be reproduced in a case where the application driver of the reproduction apparatus fails to download multimedia data corresponding to the at least one playlist.

7. The information storage medium of claim 1, wherein the progressive playlist description information comprises a description file recorded at a predetermined location of the information storage medium.

8. The information storage medium of claim 1, wherein the progressive playlist description information comprises a path information file recorded at a predetermined location of the information storage medium and a description file stored at a path designated by the path information file.

9. A reproduction apparatus configured to reproduce multimedia data, the reproduction apparatus comprising:
a reproducer, configured to decode multimedia data;
an application driver, which, in response to a playlist to be reproduced being a progressive playlist, is configured to download multimedia data from the outside to reproduce the playlist with reference to corresponding progressive playlist description information and is configured to reproduce the playlist by controlling the reproducer in order to decode the downloaded multimedia data; and
a storage configured to store the downloaded multimedia data.

10. The reproduction apparatus of claim 9, wherein the application driver refers to a flag included in a description file of the playlist and determines whether the playlist is a progressive playlist.

11. The reproduction apparatus of claim 9, wherein the application driver refers to a flag which indicates whether an autostart playlist to be reproduced before the reproduction apparatus activates an application is a progressive playlist and determines whether the autostart playlist is a progressive playlist.

12. A method by which an application driver of a reproduction apparatus reproduces multimedia data, the method comprising:
recognizing the type of an autostart playlist;
in response to the autostart playlist being a progressive playlist, downloading multimedia data for reproducing the autostart playlist from outside with reference to corresponding progressive playlist description information;
storing the downloaded multimedia data in a storage of the reproduction apparatus; and
reproducing the autostart playlist by using the stored multimedia data.

13. A recording apparatus for recording multimedia data, the recording apparatus comprising:
a recorder, configured to record data to an information storage medium; and
a controller, configured to control the recorder to record information indicating that at least one playlist is a progressive playlist and progressive playlist description information comprising information necessary information for downloading multimedia data, for reproducing the at least one playlist from the outside to the information storage medium.

14. A method of recording multimedia data, the method comprising:
recording information indicating that at least one playlist is a progressive playlist to an information storage medium; and
recording progressive playlist description information comprising information necessary for downloading multimedia data for reproducing the at least one playlist from outside to the information storage medium.

15. A reproduction apparatus configured to reproduce multimedia data, the reproduction apparatus comprising:
an application driver, which, in response to a playlist to be reproduced being a progressive playlist, is configured to download multimedia data from the outside to reproduce the playlist with reference to corresponding progressive playlist description information and is configured to reproduce the playlist by controlling a reproducer in order to decode the downloaded multimedia data.
